# EUROPÄISCHE PATENTSCHRIFT

(11) **EP 2 239 188 B1**
(45) Veröffentlichungstag und Bekanntmachung des Hinweises auf die Patenterteilung: **16.05.2012**
(21) Anmeldenummer: 10003827.2
(22) Anmeldetag: 09.04.2010
(51) Int. Cl.: B62D 53/06

(54) **Schwanenhals für ein Fahrzeug, insbesondere für ein Schwerlastfahrzeug**
Goose-neck for a vehicle, especially for a heavy duty vehicle
Col de cygne de véhicule, notamment pour véhicule gros porteur

(30) Priorität: 09.04.2009 DE 102009016725; 09.04.2009 DE 202009005380 U
(43) Veröffentlichungstag der Anmeldung: 13.10.2010
(73) Patentinhaber: Scheuerle Fahrzeugfabrik GmbH, 74629 Pfedelbach (DE)
(72) Erfinder: Vogtmann, Matthias, 74613 Öhringen Untersöllbach (DE); Hauf, Reinhard, 74613 Öhringen Michelbach (DE)
(74) Vertreter: Leitner, Waldemar

(56) Entgegenhaltungen:
- EP-A1- 1 816 059

## Beschreibung

Die Erfindung betrifft einen Schwanenhals für ein Fahrzeug nach dem Oberbegriff des Anspruchs 1.

Ein derartiger Schwanenhals ist aus der GB 2 158 025 A bekannt. Diese Druckschrift offenbart einen Schwanenhals für ein Fahrzeug, insbesondere für ein Schwerlastfahrzeug, der ein Schwanenhalsteil aufweist, das über eine horizontale Knickachse mit einem Ausleger des Schwanenhalses verbunden ist, welcher über eine Kupplung an einem Sattel eines Zugfahrzeuges ankuppelbar ist, wobei der Schwanenhals mindestens eine Verdrängungsanordnung aufweist, deren erstes Ende am Schwanenhalsteil und deren zweites Ende an dem gegenüber dem Schwanenhalsteil um die Knickachse drehbar gelagerten Vorderteil des Schwanenhalses angelenkt ist, wobei der Schwanenhals mindestens eine Verstelleinrichtung aufweist, an der das zweite Ende der Verdrängungsanordnung angelenkt ist und durch eine Verstellbewegung der Abstand zwischen Kupplung und Knickachse veränderbar ist. Nachteilig daran ist, dass der Abstand von der Befestigung der Verdrängeranordnung zur Knickachse nicht veränderbar ist.

Ein Schwanenhals ist allgemein bekannt und wird insbesondere bei Schwerlastfahrzeugen verwendet, um eine Verbindung zwischen dem Zugfahrzeug und dem von diesem gezogenen Schwerlastfahrzeug, insbesondere einen Schwerlastanhänger, auszubilden. Der Schwanenhals dient hierbei unter anderem auch dazu, die auf das Chassis des Zugfahrzeugs einwirkende Sattellast zu übertragen. Diese muss in Abhängigkeit von der vom Schwerlastfahrzeug zu tragenden Last derart groß sein, dass eine hinreichend gute Traktion des Zugfahrzeugs gewährleistet ist. Sie darf aber auch nicht so groß sein, dass die zulässige Achslast des Zugfahrzeugs überschritten wird. Um nun das Verhältnis zwischen der auf das Zugfahrzeug abgetragenen Last und den Radlasten des vom Zugfahrzeug gezogenen Lastfahrzeugs aufeinander abstimmen zu können, ist bei den bisher auf dem Markt erhältlichen Schwerlastfahrzeugen vorgesehen, eine Verdrängeranordnung am Schwanenhals in unterschiedlichen Positionen anzubringen, derart, dass das Übersetzungsverhältnis zwischen dem hydraulischen Druck in der Verdrängeranordnung und der auf das Zugfahrzeug abgetragenen Last veränderbar wird. Dabei ist jedoch problematisch, dass die Montage der Verdrängeranordnung zeitaufwändig ist und das Übersetzungsverhältnis nur in groben Stufen eingestellt werden kann. Dadurch ist eine optimale Einstellung der Achslast am Zugfahrzeug und gleichseitig am Schwenastfahrzeuganhänger nicht möglich.

Die EP 1 816 059 A1 der Anmelderin, die den Oberbegriff des Anspruchs 1 beschreibt, sieht daher bei einem Schwerlastfahrzeug, das einen zur Kupplung des Schwerlastfahrzeuges an ein Zugfahrzeug aufsattelbaren Schwanenhals aufweist, vor, dass eine dem Schwanenhals zugeordnete Verdrängeranordnung, deren Hydraulikdrücke die vom Schwanenhals auf das Zugfahrzeug abtragenden Lasten bestimmen, eingesetzt wird, die Positiv- und Negativkammern aufweist, die in vorgebbarer Kombination mit Radabstützaggregaten und/oder einem relativ drucklosen Hydraulikreservoir verbindbar sind. Diese Lösung bedingt eine spezielle Verdrängeranordnung mit Positiv- und Negativkammern. Eine derartige Verdrängeranordnung stellt aber kein Standardbauteil dar, so dass der derart ausgebildete Schwanenhals relativ kostenaufwendig herzustellen ist.

Aus der GB 1,420,634 ist ein Schwerlastfahrzeug bekannt, welches ein Zugfahrzeug aufweist, das mit dem Schwerlastfahrzeug über einen auf das Zugfahrzeug aufsattelbaren Schwanenhals gekoppelt ist. Am Schwanenhals ist eine hydraulische Verdrängeranordnung angeordnet, deren Hydraulikdrücke die vom Schwanenhals auf das Zugfahrzeug abgetragene Last bestimmen. Hierbei wird die durch die Verdrängeranordnung übertragene Last durch die Radlast bestimmt, welche auf einen Radsatz des Schwerlastfahrzeugs wirkt. Mit der Verdrängeranordnung kommunizierende Radabstützaggregate bestimmen damit die Hydraulikdrücke in der Verdrängeranordnung. Nachteilig an dem bekannten Schwerlastfahrzeug ist, dass das Verhältnis zwischen der auf das Zugfahrzeug abgetragenen Last und den Radlasten des Schwerlastfahrzeuges nicht veränderbar ist.

Die DE 20 2005 007 524 U1 beschreibt einen Schwanenhals für ein Schwerlastfahrzeug, wobei der Schwanenhals eine starr mit einer Plattform eines Aufliegers verbindbare und von dieser abkuppelbare Platte und einen Arm zum Abstützen auf einem Sattel einer Zugmaschine umfasst. Der Arm weist einen überstehenden Kupplungsbolzen zum Ankuppeln an den Sattel der Zugmaschine auf und ist durch eine Stütze mit der Platte verbunden. Ein hydraulischer Zylinder steuert die Positionierung des Kupplungsbolzens in Bezug auf die Platte. Um die Gesamtlänge eines mit einem Schwanenhals ausgestatteten Schwerlastfahrzeugs zu verringern, ist vorgesehen, dass der Arm eine mit dem unter der Platte nach unten überstehenden Kupplungsbolzen versehene Kupplungsplatte aufweist, die sich um den Arm um einen Querbolzen unter der Einwirkung des hydraulischen Steuerzylinders dreht, der mit der Platte verbunden und auf den Arm abgestützt ist, der starr mit der Stütze verbunden ist, die ihrerseits mit der Platte über ihren Fuß starr verbunden ist.

Aus der DE 28 09 628 C2 ist ein Schwerlastfahrzeug bekannt, bei dem der gesamte Schwanenhals oder dessen auf die Sattelkupplung des Zugfahrzeuges aufsattelbares Kupplungsteil mittels einer hydraulischen Verdrängeranordnung höhenbeweglich gehaltert ist, so dass der Hydraulikdruck in der Verdrängeranordnung ein Maß für die auf das Zugfahrzeug abgetragene Last ist. Da die Verdrängeranordnung ihrerseits hydraulisch mit hydraulischen Radabstützaggregaten des Schwerlastfahrzeuges kommuniziert, ist der hydraulische Druck in der Verdrängeranordnung auch vom Gewicht der auf dem Schwerlastfahrzeug transportierten Last bzw. den davon verursachten Radlasten abhängig. Im Ergebnis wird also bei erhöhter Radlast auch eine erhöhte Last auf das Zugfahrzeug abgetragen. Desweiteren sind aufgrund der hydraulischen Verbindung zwischen den Radabstützaggregaten und der Verdrängeranordnung am Schwanenhals vertikale Relativbewegungen zwischen Zugfahrzeug und Schwerlastfahrzeug beim Überfahren von Bodenunebenheiten ohne weiteres möglich, und zwar ohne Änderung der Radlasten bzw. der auf das Zugfahrzeug abgetragenen Last. Denn innerhalb des konstruktiv vorgegebenen Bewegungsbereiches der Verdrängeranordnung und der Radabstützaggregate bleibt das Verhältnis der Lasten, die einerseits auf das Zugfahrzeug abgetragen bzw. andererseits über die Radabstützaggregate auf die zugeordneten Räder wirken, unverändert.

Nach der DE 28 09 628 C2 ist ein hydraulisches Zweikreissystem vorgesehen, derart, dass ein auf der einen Fahrzeugseite angeordnetes Aggregat der dem Schwanenhals zugeordneten Verdrängeranordnung nur mit Radabstützaggregaten auf dieser Fahrzeugseite kommuniziert, während ein auf der anderen Fahrzeugseite angeordnetes weiteres Aggregat der Verdrängeranordnung nur in hydraulischer Verbindung mit Radabstützaggregaten auf der anderen Fahrzeugseite steht. Dadurch soll eine erhöhte Stabilität des Schwerlastfahrzeuges gegenüber Wankbewegungen, d.h. Rotationsbewegungen des Schwerlastfahrzeuges bezüglich seiner Mittellängsachse, für den Fall erreicht werden, dass die zu transportierende Last auf dem Vordererbereich, d.h. in der Nähe des Schwanenhalses, auf der Ladefläche des Schwerlastfahrzeuges gelagert ist.

Es ist Aufgabe der vorliegenden Erfindung, einen Schwanenhals der eingangs genannten Art derart weiterzubilden, dass in einfacher Art und Weise eine Veränderung der über den Schwanenhals auf das Zugfahrzeug einwirkenden Sattellast ermöglicht wird.

Die erfindungsgemäße Lösung der Aufgabe erfolgt durch einen Schwanenhals mit den Merkmalen des Anspruchs 1. Vorteilhafte Weiterbildungen der Erfindung ergeben sich aus den Unteransprüchen.

Durch die erfindungsgemäßen Maßnahmen wird in vorteilhafter Weise ein Schwanenhals ausgebildet, der sich dadurch auszeichnet, dass durch eine einfache Verschiebung des Angriffspunkts der Verdrängeranordnung am Vorderteil des Schwanenhalses die auf das Zugfahrzeug abgetragene Sattellast veränderbar ist. Durch eine einfach durchzuführende Verstellbewegung der Verstelleinrichtung kann also durch eine Veränderung des Angriffspunkts der Verdrängeranordnung die in den zugfahrzeugseitigen Arm des Vorderteils des Schwanenhalses eingeleitete Kraft verändert und derart die Sattellast eingestellt werden. Eine derartige Verstellung ist auch noch bei einem bereits beladenen Schwerlastfahrzeug durchzuführen, so dass in einfacher Art und Weise eine Nachregulierung der Sattellast möglich ist.

Eine vorteilhafte Weiterentwicklung sieht vor, dass die Verstelleinrichtung einen mittels einer Antriebseinrichtung verschiebbaren Schlitten aufweist, an den das zweite Ende der Verdrängeranordnung angelenkt ist. Eine derartige Maßnahme besitzt den Vorteil einer besonders einfachen Ausgestaltung an der Verstelleinrichtung.

Weitere Einzelheiten und Vorteile der Erfindung sind dem Ausführungsbeispiel zu entnehmen, das im folgenden anhand der Figuren beschrieben wird. Es zeigen:
- Figur 1:: ein Ausführungsbeispiel eines Schwanenhalses zusammen mit ei- nem Zugfahrzeug und einem als Plattformwagen ausgebildeten Schwerlastfahrzeug,
- Figur 2:: das Ausführungsbeispiel der Figur 1 ohne Zugfahrzeug,
- Figur 3:: eine vergrößerte Darstellung der Verstelleinrichtung des Schwanen- halses,
- Figur 4:: eine Ansicht des Schwanenhalses aus der Richtung IV der Figur 2, und
- Figur 5:: eine perspektivische Darstellung der Verstelleinrichtung.

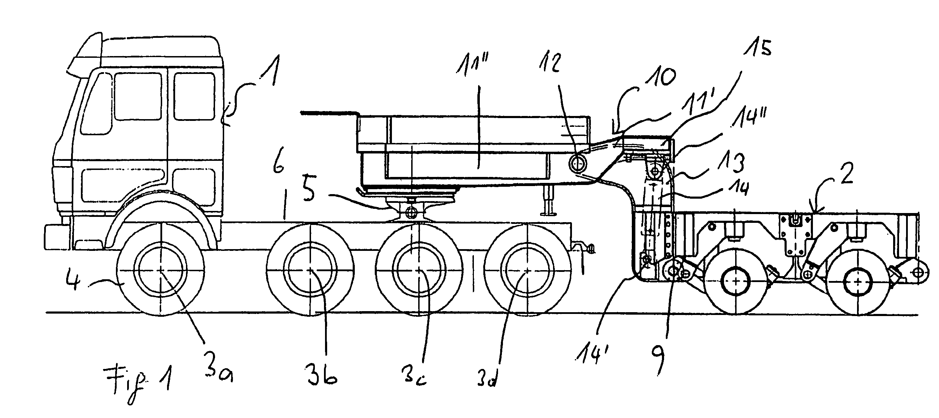

In Figur 1 ist ein Zugfahrzeug 1 dargestellt, welches über einen Schwanenhals 10 mit einem Schwerlastfahrzeug 2 gekoppelt ist. Das Zugfahrzeug 1 weist vier Achsen 3a-3d auf, wobei zumindest die vordere Achse 3a mit lenkbaren Rädern 4 ausgestattet ist. Ein zugfahrzeugseitiger Arm 11" eines Vorderteils 11 des Schwanenhalses 10 ist über eine Kupplung 5 auf einem Sattel 6 des Zugfahrzeugs um die Hochsachse schwenkbar angeordnet. Die über den Schwanenhals 10 auf das Zugfahrzeug 1 wirkende Sattellast bestimmt die Achslasten des Zugfahrzeugs 1 und somit dessen Traktionsvermögen. Das Vorderteil 11 des Schwanenhalses 10 ist über eine Knickachse 12 mit dem eigentlichen Schwanenhalsteil 13 verbunden, so dass eine Relativbewegung des Schwerlastfahrzeugs 2 um die Knickachse 12 gegenüber dem Zugfahrzeug 1 ermöglich ist. Das Schwanenhalsteil 12 ist über eine Anlenkachse 9 mit dem Schwerlastfahrzeug 2 verbunden. Eine Verdrängeranordnung 14 ist mit ihrem ersten Ende 14' am Schwanenhalsteil 13 und mit ihrem zweiten Ende 14" am Vorderteil 11 des Schwanenhalses 10 verbunden. Ein derartiger Aufbau ist bekannt und muss daher nicht mehr weiter beschrieben werden.

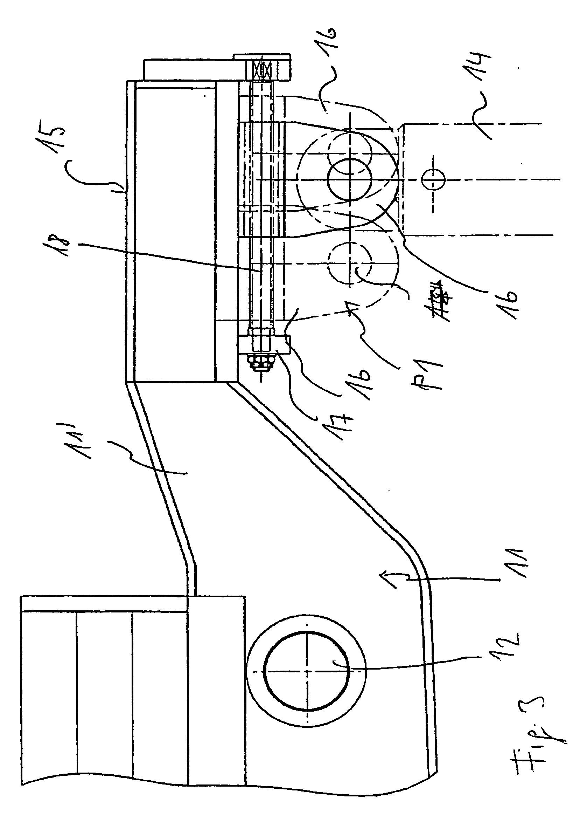

Um nun in einfacher Art und Weise eine Veränderung der vom Schwanenhals 10 auf das Chassis des Zugfahrzeugs 1 abgetragene Sattellast bewirken zu können, ist bei dem beschriebenen Schwanenhals 10 vorgesehen, dass der Anlenkpunkt der Verdrängeranordnung 14 am Vorderteil 11 des Schwanenhalses 10 durch eine Verstelleinrichtung 15 veränderbar ist: Die mit ihrem ersten Ende 14' am Schwanenhalsteil 13 befestigte Verdrängeranordnung 14 ist mit ihrem zweiten Ende 14" nicht unmittelbar am Vorderteil 11 des Schwanenhalses 10 angelenkt, sondern es ist - wie am besten aus Figur 3 ersichtlich - vorgesehen, dass die Verstelleinrichtung 15 an einem schwerlastfahrzeugseitigen Arm 11' des Auslegers 11 angeordnet ist und das zweite Ende 14" der Verdrängeranordnung 14 an dieser angelenkt ist. Die Verstelleinrichtung 15 dient dazu, den Angriffspunkt der Verdrängeranordnung 14 am Ausleger 11 des Schwanenhalses 10 zu verändern, so daß durch die dadurch geänderten Hebelverhältnisse die auf das Zugfahrzeug 1 abgetragene Sattellast veränderbar ist.

Im gezeigten Ausführungsbeispiel ist hierzu vorgesehen, dass das zweite Ende 14" der Verdrängeranordnung 14 an einem Schlitten 16 der Verstelleinrichtung 15 angelenkt ist, der verschiebbar auf einer Schlittenführung 17 angeordnet ist. Die Schlittenführung 17 weist eine Spindel, also eine Antriebseinrichtung 18, auf, so dass eine durch eine entsprechende Verstellbewegung der Spindel 18' ein axiale Verschiebung des Schlittens 16 und somit eine Veränderung des Angriffpunkts der Verdrängeranordnung 14 am Ausleger 11 des Schwanenhalses 10 erzielbar ist.

In Figur 3 sind nun drei unterschiedliche Positionen des Schlittens 16 dargestellt. Wird nun der Schlitten 16 in die in Figur 3 dargestellte linke Position P1 bewegt, so verringert sich der Abstand zwischen dem Angriffspunkt der Verdrängeranordnung 14 am Arm 11' des Auslegers 11 des Schwanenhalses 10 und der Knickachse 12, während der Abstand zwischen dieser Knickachse 12 und dem Einleitpunkt der Sattelkräfte aber konstant bleibt. In Folge des kürzeren Hebelarms auf der lastfahrzeugseitigen Seite des Auslegers 11 wird eine geringere Sattellast auf das Zugfahrzeug 1 abgetragen: Wird hingegen der Schlitten 16 der Verstelleinrichtung 15 in seine in Figur 3 rechts dargestellte Position bewegt, so vergrößert sich der Abstand zwischen der Knickachse 12 und dem Angriffspunkt der Verdrängeranordnung 14 am Ausleger 11. Dies hat aufgrund des längeren Hebels zur Folge, dass eine höhere Sattellast auf das Zugfahrzeug 1 abgetragen wird. Die Verstelleinrichtung 15 erlaubt somit eine einfache Einstellung der auf das Zugfahrzeug 1 abgetragenen Sattellast.

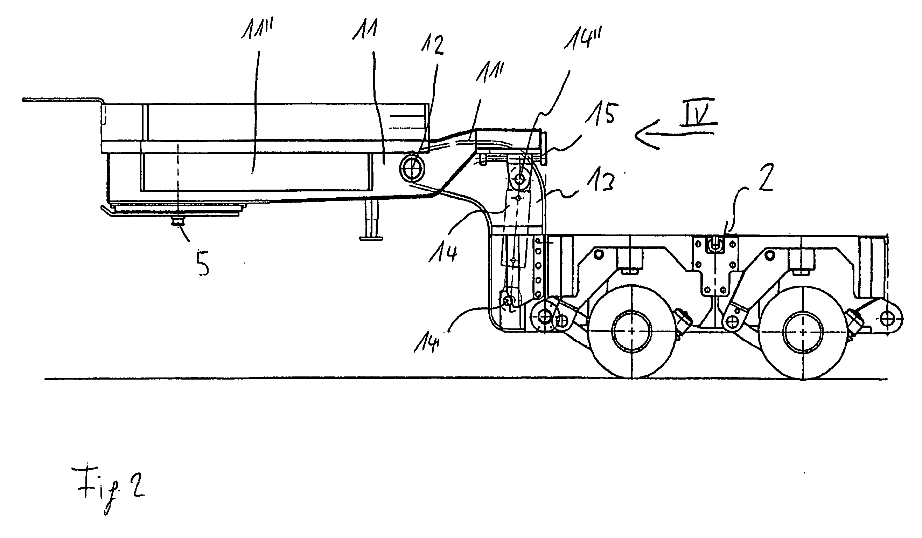

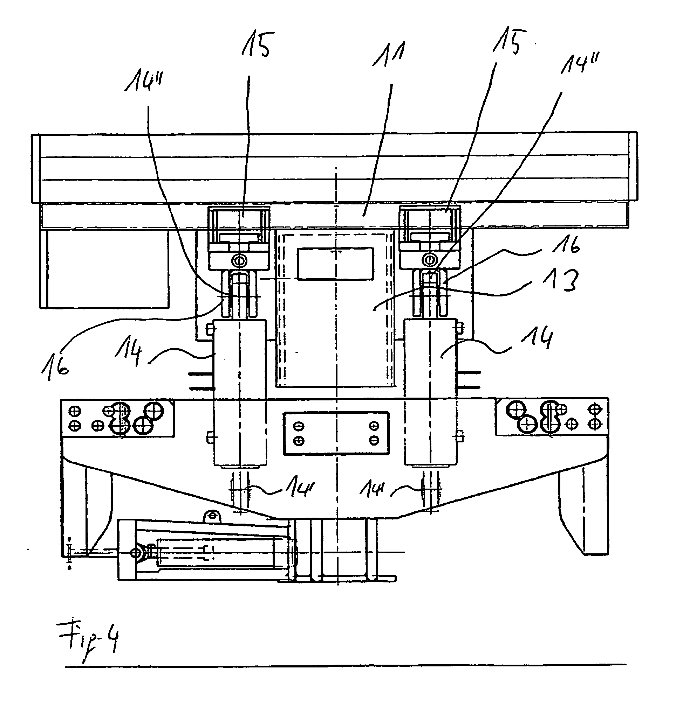

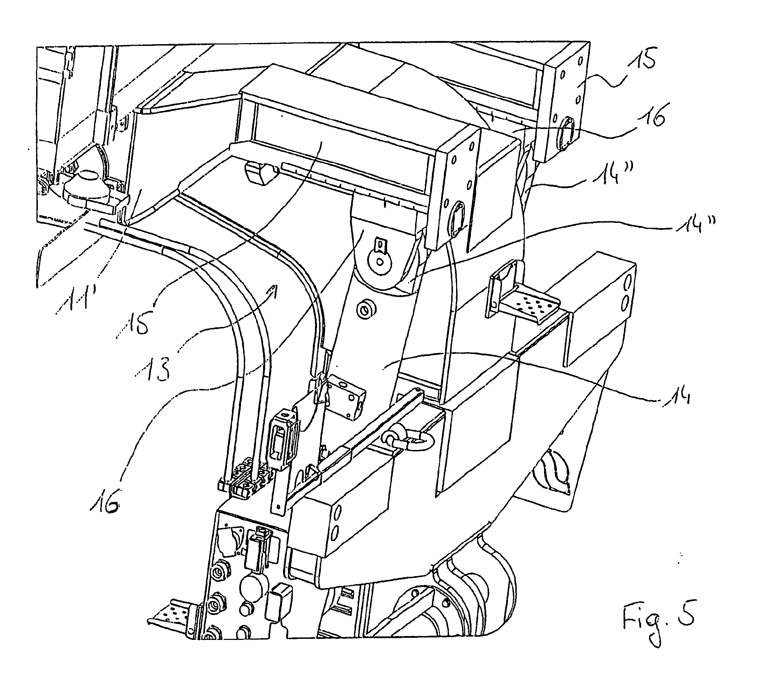

Die Figur 4 zeigt nun eine Rückansicht der in Figuren 1 bis 3 dargestellten Anordnung und die Figur 5 eine perspektivische Ansicht eines Teils des Schwanenhalses 10. Man erkennt aus der Figur 4, dass das beschriebene Ausführungsbeispiel zwei Verdrängeranordnungen 14 aufweist, die jeweils von einer Verstelleinrichtung 15 verstellbar sind. Die zweiten Enden 14" der beiden Verdrängeranordnungen 14 sind jeweils an dem Schlitten 16 der jeweiligen Verstelleinrichtung 15 angelenkt, wobei die Verstelleinrichtungen 15 am lastfahrzeugseitigen Arm 11' des Auslegers 11 angeordnet sind. Die beiden Verdrängeranordnungen 14 sind jeweils symmetrisch zum Schwanenhalsteil 12 angeordnet. Es ist aber auch möglich, dass nur eine einzelne Verdrängeranordnung 14 oder mehr als zwei Verdrängeranordnungen 14 vorgesehen sind.

Bei der obigen Beschreibung wurde davon ausgegangen, dass der Ausleger 11 mit seinen Armen 11' und 11" einen zweiseitigen Hebel ausbildet, wobei am ersten Arm 11' die Verdrängeranordnung 14 bzw. die Verdrängeranordnungen 14 angreifen, während der zweite Arm 11" des Auslegers 11 über die Kupplung 5 mit dem Chassis des Zugfahrzeugs 1 gekuppelt ist und derart das Zugfahrzeug 1 mit der Sattellast beaufschlagt. Es ist aber auch möglich, dass der Ausleger 11 als ein einarmiger Hebel ausgebildet ist, bei dem benachbart zur Knickachse 12 die Verdrängeranordnung 14 bzw. die Verdrängeranordnungen 14 angreifen. Welche Modifikationen der Fachmann hier vorzunehmen hat, ist ihm aus obiger Beschreibung klar ersichtlich und muss daher nicht mehr näher erläutert werden.

Bei der obigen Beschreibung wird des weiteren davon ausgegangen, dass das erste Ende 14' der Verdrängeranordnung 14 ortsfest am Schwanenhalsteil 13 angelenkt ist. Es kann durchaus für gewisse Anwendungsfälle von Vorteil sein, dass auch das erste Ende 11' in seiner axialen Position veränderbar ausgebildet ist.

Zusammenfassend ist festzuhalten, dass durch die beschriebenen Maßnahmen ein Schwanenhals 10 ausgebildet ist, durch den das Verhältnis zwischen der auf das Zugfahrzeug 1 abgetragenen Sattellast und den Radlasten des Schwerlastfahrzeuges 2 leicht veränderlich ist.

## Patentansprüche

1. Schwanenhals für ein Fahrzeug, insbesondere für ein Schwerlastfahrzeug, der ein Schwanenhalsteil (13) aufweist, der über eine horizontal angeordnete und senkrecht zur Längsrichtung des Schwanenhalses verlaufende Knickachse (12) mit einem Ausleger (11) des Schwanenhalses (10) verbunden ist, welcher über eine Kupplung (5) an einem Sattel (6) eines Zugfahrzeugs (1) ankuppelbar ist, wobei der Schwanenhals (10) mindestens eine Verdrängeranordnung (14) aufweist, deren erstes Ende (14') am Schwanenhalsteil (13) und deren zweites Ende (14") an dem gegenüber dem Schwanenhalsteil (13) um die Knickachse (12) drehbar gelagerten Vorderteil (11) des Schwanenhalses (10) angelenkt ist, **dadurch gekennzeichnet, dass** der Schwanenhals (10) mindestens eine Verstelleinrichtung (15) aufweist, an der das zweite Ende (14") der Verdrängeranordnung (14) angelenkt und durch eine Verstellbewegung der Verstelleinrichtung (15) in seinem Abstand zur Knickachse (12) veränderbar ist.

2. Schwanenhals nach Anspruch 1, **dadurch gekennzeichnet, dass** die Verstelleinrichtung (15) einen Schlitten (16) aufweist, der auf einer Schlittenführung (17) verschiebbar gelagert ist, und dass der Schlitten (16) mit dem zweiten Ende (14") der Verdrängeranordnung (14) verbunden ist.

3. Schwanenhals nach Anspruch 2 einem der vorangehenden Ansprüche, **dadurch gekennzeichnet, dass** die Verstelleinrichtung (15) eine Antriebseinrichtung (18) zur Verstellung des mit der Verdrängeranordnung (14) verbunden Schlittens (16) aufweist.

4. Schwanenhals nach einem der Ansprüche 2 oder 3, **dadurch gekennzeichnet, dass** der Schlitten (16) der Verstelleinrichtung (15) kontinuierlich oder in diskreten Positionen zwischen einer ersten und einer zweiten Endposition positionierbar ist.

5. Schwanenhals nach einem der vorangehenden Ansprüche, **dadurch gekennzeichnet, dass** der Schwanenhals (10) mindestens eine Verdrängeranordnung (14) aufweist.

6. Schwanenhals nach Anspruch 5, **dadurch gekennzeichnet, dass** der Schwanenhals (10) mindestens zwei Verdrängeranordnungen (14) aufweist, deren zweites Ende (14") durch mindestens eine Verstelleinrichtung (15) verschiebbar am Vorderteil (11) angelenkt sind.

7. Schwanenhals nach einem der vorangehenden Ansprüche, **dadurch gekennzeichnet, dass** das Vorderteil (11) des Schwanenhalses (10) einen lastfahrzeugseitigen ersten Arm (11') und einen zugfahrzeugseitigen zweiten Arm (11 ") aufweist.

8. Schwanenhals nach Anspruch 7, **dadurch gekennzeichnet, dass** die Verstelleinrichtung (15) am ersten Arm (11') des Vorderteils (11) des Schwanenhalses (10) angeordnet ist.

9. Schwanenhals nach Anspruch 7, **dadurch gekennzeichnet, dass** die Verstelleinrihtung (15) am zweiten Arm (11") des Vorderteils (11) des Schwanhalses (10) angeordnet ist.

10. Schwanenhals nach einem der Ansprüche 1 bis 6, **dadurch gekennzeichnet, dass** das Vorderteil (11) als ein einseitiger Hebel ausgebildet ist.

11. Schwanenhals nach Anspruch 9, **dadurch gekennzeichnet, dass** die Verstelleinrichtung (15) in Bezug auf die Knickachse (12) am Vorderteil (11) des Schwanenhalses (10) zugfahrzeugseitig angelenkt ist.

12. Schwerlastfahrzeug mit einem Schwanenhals (10) zur Verbindung mit einem Zugfahrzeug (1), **dadurch gekennzeichnet, dass** der Schwanenhals (10) nach einem der Ansprüche 1 bis 11 ausgebildet ist.

## Claims

1. Goose neck for a vehicle, particularly for a heavy load vehicle, comprising a goose neck element (13), which is connected to a cantilever (11) of the goose neck (10) by an articulation axis (12) being horizontally arranged and running perpendicular to the longitudinal direction of the goose neck, which can be coupled to a semi-trailer (6) of a towing vehicle (1) by a coupling (5), wherein the goose neck (10) comprises at least one displacer device (14), a first end (14') of the latter is hinged at the goose neck element (13) and its second end (14") is hinged at a front element (11) of the goose neck (10) which is mounted pivotable around the articulation axis (12) relative to the goose neck element (13), **characterized in that**
the goose neck (10) comprises at least one adjusting device (15) at which the second end (14") of the displacer device (14) is hinged, and its distance to the articulation axis (12) is variable by an adjusting movement of the adjusting device (15).

2. Goose neck according to claim 1, wherein the adjusting device (15) comprises a carriage (16) which is movable mounted on a carriage guide (17) and the carriage (16) is connected to the second end (14") of the displacer device (14).

3. Goose neck according to claim 2, wherein the adjusting device (15) comprises a driving means (18) for an adjustment of the carriage (16) connected to the displacer device (14).

4. Goose neck according to claim 2 or 3, wherein the carriage (16) of the adjusting device (15) is positionable continuously or at discrete positions between a first and a second end position.

5. Goose neck according to one of the previous claims, wherein the goose neck (10) comprises at least one displacer device (14).

6. Goose neck according to claim 5, wherein the goose neck (10) comprises at least two displacer devices (14), the second end (14") of these is movably hinged at the front element (11) by at least one adjusting device (15).

7. Goose neck according to one of the previous claims, wherein the front element (11) of the goose neck (10) comprises a first arm (11') at the load vehicle side and a second arm (11 ") at the towing vehicle side.

8. Goose neck according to claim 7, wherein the adjusting device (15) is arranged at the first arm (11') of the front element (11) of the goose neck (10).

9. Goose neck according to claim 7, wherein the adjusting device (15) is arranged at the second arm (11") of the front element (11) of the goose neck (10).

10. Goose neck according to one of the claims 1 to 6, wherein the front element (11) is formed as an one-sided lever.

11. Goose neck according to claim 9, wherein the adjusting device (15) is hinged at the front element (11) of the goose neck (10) at the towing vehicle side relative to the articulation axis (12).

12. Heavy load vehicle having a goose neck (10) for connection to a towing vehicle (1), **characterized in that** the goose neck (10) is formed according to one of the claims 1 to 11.

## Revendications

1. Col de cygne pour un véhicule, en particulier pour un véhicule poids lourd comportant une pièce en col de cygne (13) reliée par un axe articulé (12) s'étendant horizontalement et perpendiculairement à la direction longitudinale du col de cygne à une console (11) du col de cygne (10), laquelle peut être accouplée au moyen d'un accouplement (5) à une selle (6) d'un véhicule tracteur (1), ledit col de cygne (10) comprenant au moins un ensemble de déplacement (14) dont la première extrémité (14') est articulée sur la pièce en col de cygne (13) et la deuxième extrémité (14") sur la partie avant (11) du col de cygne (10) logée en opposition à la pièce en col de cygne (13) de manière rotative autour de l'axe articulé (12), **caractérisé en ce que** ledit col de cygne (10) comprend au moins un dispositif de réglage (15) sur lequel la deuxième extrémité (14") de l'ensemble de déplacement (14) est articulée et dont l'espacement par rapport à l'axe articulé (12) peut être modifié par déplacement du dispositif de réglage (15).

2. Col de cygne selon la revendication 1, **caractérisé en ce que** le dispositif de réglage (15) comprend un chariot (16) monté de manière à pouvoir coulisser sur une glissière de chariot (17), et **en ce que** le chariot (16) est raccordé à une deuxième extrémité (14") de l'ensemble de déplacement (14).

3. Col de cygne selon la revendication 2, **caractérisé en ce que** le dispositif de réglage (15) comprend un dispositif d'entraînement (18) pour le déplacement du chariot (16) raccordé à l'ensemble de déplacement (14).

4. Col de cygne selon l'une des revendications 2 ou 3, **caractérisé en ce que** le chariot (16) du dispositif de réglage (15) peut être positionné entre une première et une deuxième positions finales, par déplacement continu ou via des positions discrètes.

5. Col de cygne selon l'une des revendications précédentes, **caractérisé en ce que** ledit col de cygne (10) comprend au moins un ensemble de déplacement (14).

6. Col de cygne selon la revendication 5, **caractérisé en ce que** ledit col de cygne (10) comprend au moins deux ensembles de déplacement (14) dont les deuxièmes extrémités (14") sont articulées par au moins un dispositif de réglage (15) de manière à pouvoir être déplacées sur la partie avant (11).

7. Col de cygne selon l'une des revendications précédentes, **caractérisé en ce que** la partie avant (11) du col de cygne (10) comprend un premier bras (11') côté véhicule poids lourd et un deuxième bras (11") côté véhicule tracteur.

8. Col de cygne selon la revendication 7, **caractérisé en ce que** le dispositif de réglage (15) est monté sur le premier bras (11') de la partie avant (11) du col de cygne (10).

9. Col de cygne selon la revendication 7, **caractérisé en ce que** le dispositif de réglage (15) est monté sur le deuxième bras (11") de la partie avant (11) du col de cygne (10).

10. Col de cygne selon l'une des revendications 1 à 6, **caractérisé en ce que** la partie avant (11) est réalisé comme levier unilatéral.

11. Col de cygne selon la revendication 9, **caractérisé en ce que**, par rapport à l'axe articulé (12), le dispositif de réglage (15) est articulé sur la partie avant (11) du col de cygne (10) côté véhicule tracteur.

12. véhicule poids lourd avec un col de cygne (10) pour l'accouplement à un véhicule tracteur (1), **caractérisé en ce que** le col de cygne (10) est réalisé selon l'une des revendications 1 à 11.
